# EUROPÄISCHE PATENTANMELDUNG

(11) **EP 3 751 137 A1**
(43) Veröffentlichungstag der Anmeldung: **16.12.2020**
(21) Anmeldenummer: 20176264.8
(22) Anmeldetag: 25.05.2020
(51) Int. Cl.: F03G 6/00, F28D 20/00

(54) **VERFAHREN ZUR REVERSIBLEN SPEICHERUNG UND ABGABE VON THERMISCHER ENERGIE, SOWIE ENTSPRECHENDES ENERGIESPEICHERSYSTEM**

(30) Priorität: 13.06.2019 DE 102019116082
(71) Anmelder: RWE Power AG, 45141 Essen (DE)
(72) Erfinder: Schwendig, Dr. Frank, 51643 Gummersbach (DE)
(74) Vertreter: Keenway Patentanwälte Neumann Heine Taruttis

(57) **Zusammenfassung**

Die Erfindung bezieht sich auf die reversible Speicherung thermischer Energie in mindestens zwei Speicherkreisläufen 2, 3 unterschiedlicher, aufeinander abgestimmter, Temperaturen, von denen zumindest der erste Speicherkreislauf 2 bei hoher Temperatur eine Salzschmelze als Energiespeicher aufweist, in die und aus der Energie sensibel, das heißt ohne Phasenübergang, entnommen wird, ist einfach aufzubauen und zu betreiben. Insbesondere lassen sich effizienter hohe Temperaturen realisieren und der Aufwand für das Austauschen thermisch geschädigter Salzschmelze ist im Vergleich zu bekannten Ansätzen reduziert. Die Temperaturführung ist flexibler möglich. Die weiteren Speicherkreisläufe 3 werden mit Salzschmelze und/oder Thermoöl betrieben.

## Beschreibung

Gegenstand der vorliegenden Erfindung ist ein Verfahren zur reversiblen Speicherung und Abgabe von thermischer Energie, sowie ein entsprechendes Energiespeichersystem unter Verwendung von Salzschmelzen, wobei die Energiespeicherung und -abgabe sensibel, d.h. ohne Phasenübergang, erfolgt.

Aufgrund des vermehrten Einsatzes von erneuerbaren Energien, beispielsweise unter Einsatz von solarthermischen Anlagen oder Windenergieanlagen, und aufgrund der Lastschwankungen für fossile Kraftwerke besteht ein vermehrter Bedarf für die reversible Speicherung von thermischer Energie. Der Einsatz von Salzschmelzen als Wärmespeicher ist hier bekannt, beispielsweise aus der Publikation von Thomas Bauer, "Energie aus dem Salz", BWK Bd. 71(2019), Nr. 5, S. 42 bis 44. Hier wird ein System beschrieben, welches einen Salzschmelzentank für eine kalte Salzschmelze und einen Salzschmelzentank für eine heiße Salzschmelze aufweist, wobei die Salzschmelze über einen Elektroerhitzer oder Wärmeübertrager entsprechend erwärmt wird. Insbesondere dann, wenn eine Verstromung bei der Abgabe der thermischen Energie erfolgen soll, ist eine hohe Temperatur der Salzschmelze erforderlich, um möglichst große Wirkungsgrade bei der Verstromung zu erzeugen. Folglich muss ein solches Systems große Temperaturbereiche abdecken, so beispielsweise 170°C bis 560°C in der oben genannten Publikation . In diesem Bereich darf die Salzschmelze weder kristallisieren, noch darf sie sich zersetzen. Dies stellt hohe Anforderungen an die Salzschmelze und erfordert den Einsatz von vergleichsweise teuren Salzen.

Hiervon ausgehend liegt der vorliegenden Erfindung die Aufgabe zugrunde, die aus dem Stand der Technik bekannten Nachteile zumindest teilweise zu überwinden und insbesondere ein Verfahren zur Energiespeicherung und ein Energiespeichersystem anzugeben, mit denen sich thermische Energie einfach reversibel speichern lässt und welches im Hinblick auf die eingesetzten Wärmemedien flexible ist.

Diese Aufgabe wird gelöst mit den Merkmalen der unabhängigen Ansprüche. Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Vorsorglich sei angemerkt, dass die hier verwendeten Zahlwörter ("erste", "zweite",...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vor-geben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Das erfindungsgemäße Verfahren zur reversiblen Speicherung und Abgabe von thermischer Energie umfasst folgende Merkmale:
bei der Speicherung wird thermische Energie so in ein erstes Wärmemedium umfassend eine erste Salzschmelze eingebracht, dass das erste Wärmemedium von einer ersten Minimaltemperatur auf eine erste Maximaltemperatur erhitzt wird und
thermische Energie wird so in ein zweites Wärmemedium eingebracht, dass das zweite Wärmemedium von einer zweiten Minimaltemperatur auf eine zweite Maximaltemperatur erhitzt wird und
bei der Abgabe wird dem ersten Wärmemedium thermische Energie entnommen,
bis es die erste Minimaltemperatur erreicht hat und dem zweiten Wärmemedium wird thermische Energie entnommen, bis es die zweite Minimaltemperatur erreicht hat,
wobei die erste Maximaltemperatur größer als die zweite Maximaltemperatur und die erste Minimaltemperatur größer ist als die zweite Minimaltemperatur ,
wobei das erste Wärmemedium in mindestens einem ersten Speichervolumen bei mindestens einer der folgenden Temperaturen: der ersten Minimaltemperatur und der ersten Maximaltemperatur und das zweite Wärmemedium in mindestens einem zweiten Speichervolumen bei mindestens einer der folgenden Temperaturen: der zweiten Minimaltemperatur und der zweiten Maximaltemperatur gespeichert wird.

Bei der ersten Salzschmelze kann es sich um eine Schmelze eines einzigen oder mehrerer Salze handeln. Die entsprechenden Salze werden so ausgewählt und zusammengestellt, dass die Kristallisationstemperatur der ersten Salzschmelze unterhalb der ersten Minimaltemperatur liegt.

Die Wahl der möglichen Temperaturbereiche hängt von der Wahl der Wärmemedien ab. So bestimmt beispielsweise die Kristallisationstemperatur einer Salzschmelze als Wärmemedium die entsprechende Minimaltemperatur, die oberhalb der Kristallisationstemperatur liegen muss. Je nach Wahl der Wärmemedien kann es zu Situationen kommen, in denen die Maximaltemperatur im unteren Bereich (also beispielsweise die zweite Maximaltemperatur) größer ist als die darüberliegende Minimaltemperatur (also beispielsweise die erste Minimaltemperatur). Es ist jedoch auch möglich, die Wärmemedien so zu wählen, dass die entsprechende Maximaltemperatur im unteren Bereich gleich ist als die darüberliegende Minimaltemperatur oder auch kleiner als diese. Üblicherweise wird das entsprechende Verfahren so durchgeführt, dass möglichst effizient eine hohe Ausgangstemperatur eines bei der Abgabe von thermischer Energie erwärmten Zielmediums erreicht wird, die üblicherweise im Bereich der ersten Maximaltemperatur liegt, so dass eventuelle Lücken oder Überschneidungen der benachbarten Temperaturbereiche der Wärmemedien in Kauf genommen werden können.

Beispielsweise liegt die erste Maximaltemperatur bei etwa 650°C und die erste Minimaltemperatur bei etwa 500°C, während die zweite Maximaltemperatur bei etwa 500°C bis 550°C und die zweite Minimaltemperatur bei etwa 290°C liegt. Die Wahl der Wärmemedien, insbesondere im Hinblick auf die entsprechenden Minimaltemperaturen und der Maximaltemperaturen erfolgt bevorzugt in Abhängigkeit von dem Wärmebedarf und/oder den Temperaturanforderungen eines Verbrauchers bei Abgabe der thermischen Energie. Minimaltemperaturen und Maximaltemperaturen werden vorzugsweise unter Ausnutzung der Stoffeigenschaften der Wärmemedien, insbesondere Salzschmelzen und der Kosten der Wärmemedien, insbesondere Salzschmelzen festgelegt.

Die zu speichernde thermische Energie kann insbesondere solarthermisch erzeugte Wärme, elektrisch erzeugte Wärme, Wärme aus einer Wärmepumpe, fossil erzeugte Wärme und/oder Abwärme umfassen. Unter elektrisch erzeugter Wärme wird Wärme verstanden, die durch Umwandlung elektrischer Energie erzeugt wird. Hierdurch kann beispielsweise ein Überschuss an elektrischem Strom gespeichert werden, in dem überschüssiger Strom, der beispielsweise die Netzfrequenz negativ beeinflussen könnte, gespeichert wird. Unter Wärme aus einer Wärmepumpe wird Wärme verstanden, die aus einer elektrisch angetriebenen Wärmepumpe gewonnen wird. Hierdurch kann beispielsweise ein Überschuss an elektrischem Strom gespeichert werden, in dem überschüssiger Strom, der beispielsweise die Netzfrequenz negativ beeinflussen könnte, gespeichert wird. Unter dem Begriff fossil erzeugte Wärme wird Wärme verstanden, die durch die Verbrennung fossiler Brennstoffe erzeugt wird, beispielsweise in einem Kraftwerk. Unter dem Begriff Abwärme wird die Wärme verstanden, die bei einem exothermen Prozess erzeugt wird, beispielsweise durch chemische Reaktionen oder auch durch die Verbrennung von regenerativen Rohstoffen wie beispielsweise Holz oder die Verbrennung von Abfällen.

Die abgegebene thermische Energie kann für verschiedene Zwecke eingesetzt werden, beispielsweise zur Aufheizung von Wasserdampf als Arbeitsdampf, beispielsweise zur Verstromung über eine Turbine, als Wasserdampf für Fernwärme oder ähnliches.

Als Salz zur Bildung von Salzschmelzen werden insbesondere Nitratsalze eingesetzt, insbesondere mindestens eines der folgenden Salze Natriumnitrat und Kaliumnitrat oder eine Mischung aus mindestens zwei dieser Salze. Darüber hinaus können zusätzlich oder alternativ auch andere Salze wie Nitrite, Hydroxyde oder Chloride zur Bildung von Salzschmelzen verwendet werden. Diese in Frage kommenden Salze können zur Bildung des ersten Wärmemediums aber auch zur Bildung des zweiten Wärmemediums oder weiterer dritter Wärmemedien eingesetzt werden.

Durch die Aufteilung der Speicherung und Abgabe in einen ersten Speicherkreislauf höherer Temperatur und zumindest einen zweiten Speicherkreislauf niedrigerer Temperatur hat verschiedene Vorteile. Im Vergleich zu einer Situation, in der nur eine Salzschmelze den Temperaturbereich zwischen erster Maximaltemperatur und zweiter Minimaltemperatur abdecken muss sind die Anforderungen an die erste Salzschmelze und auch an das zweite Wärmemedium geringer. Weiterhin ist die Zersetzung des Salzes in der ersten Salzschmelze mit geringerem Aufwand behebbar. So muss im Falle einer so großen Zersetzung, dass die erste Salzschmelze nicht mehr brauchbar ist, nur eine geringere Menge Salzschmelze getauscht werden. Weiterhin kann so eine erste Salzschmelze gewählt und zusammengestellt werden, die im Hinblick auf Kristallisationstemperatur, Zersetzungstemperatur und Wärmeübergang auf den Temperaturbereich zwischen der ersten Minimaltemperatur und der ersten Maximaltemperatur optimale Eigenschaften aufweist. Dies ist einfacher als bei einem größeren abzudeckenden Temperaturbereich, insbesondere kann so der Wirkungsgrad des Wärmeübergangs verbessert werden und effizienter eine höhere Temperatur auf der Seite des Verbrauchers realisiert werden. Auch können die Bauteile, die mit der ersten Salzschmelze in Kontakt kommen, beispielsweise Leitungen und Speicher, kleiner ausgelegt werden als bei einer Salzschmelze, die den gesamten Temperaturbereich von erster Maximaltemperatur bis zweiter Minimaltemperatur abdeckt. Da die Salzschmelzen korrosiv sind, kann so der Einsatz entsprechend korrosionsfester Baumaterialien reduziert werden und im Falle eines notwendigen Austausches von Bauteilen aufgrund von Korrosion ist der Materialaufwand reduziert.

Vorteilhafter Weise ist mindestens ein drittes Wärmemedium ausgebildet wobei bei der Speicherung thermische Energie so in das dritte Wärmemedium eingebracht wird, dass das dritte Wärmemedium von einer dritten Minimaltemperatur auf eine dritte Maximaltemperatur erhitzt wird, bei der Abgabe dem dritten Wärmemedium thermische Energie entnommen wird, bis es die dritte Minimaltemperatur erreicht hat, wobei das dritte Wärmemedium in mindestens einem dritten Speichervolumen bei mindestens einer der folgenden Temperaturen: der dritten Minimaltemperatur und der dritten Maximaltemperatur gespeichert wird, wobei die dritte Minimaltemperatur kleiner oder gleich der zweiten Minimaltemperatur ist.

Bevorzugt ist also auch eine Schachtelung von verschiedenen Speicherkreislaufen, bei den ein erster Speicherkreis mit dem ersten Wärmemedium die Temperaturen zwischen der ersten Maximaltemperatur und der ersten Minimaltemperatur, worauf in absteigender Reihenfolge zunächst der zweite Speicherkreis mit dem zweiten Wärmemedium anschließt mit Temperaturen zwischen zweiter Maximaltemperatur, die größer oder gleich der ersten Minimaltemperatur ist, und der zweiten Minimaltemperatur, worauf sich ein oder mehrere dritte Speicherkreisläufe mit jeweiligen dritten Wärmemedien anschließen, wobei für jeden der Speicherkreisläufe eine dritte Minimaltemperatur und eine dritte Maximaltemperatur vorgegeben ist und die jeweilige dritte Maximaltemperatur größer oder gleich der Minimaltemperatur des bei der nächsthöheren Temperatur anschließenden Speicherkreislaufs ist.

Bevorzugt werden erstes Wärmemedium, zweites Wärmemedium und/oder gegebenenfalls drittes Wärmemedium drucklos gefördert, insbesondere durch entsprechende Pumpen.

Bevorzugt umfasst das dritte Wärmemedium eine dritte Salzschmelze. Die dritte Salzschmelze weist bevorzugt eine Kristallisationstemperatur unterhalb der dritten Minimaltemperatur auf.

Bevorzugt umfasst das zweite Wärmemedium eine zweite Salzschmelze. Bevorzugt weist die zweite Salzschmelze eine Kristallisationstemperatur unterhalb der zweiten Minimaltemperatur auf.

Bevorzugt umfassen die erste Salzschmelze, die zweite Salzschmelze und/oder die dritte Salzschmelze identische Salze, gegebenenfalls in anderen Zusammensetzungen. Dies ermöglicht einen kostengünstigeren Betrieb, da nur eine beschränkte Anzahl von Salzen oder sogar nur eine einzige Art von Salzschmelze vorgehalten werden muss. Gleichzeitig ist das erste Wärmemedium am anfälligsten für deine thermische Zersetzung, da hier die höchsten Temperaturen anliegen. So kann bedarfsweise nur das erste Wärmemedium getauscht werden, wenn notwendig, während das zweite Wärmemedium und/oder das dritte Wärmemedium weiter verwendet werden können.

Bevorzugt umfasst mindestens eines aus dem ersten Wärmemedium und dem zweiten Wärmemedium und gegebenenfalls dem dritten Wärmemedium mindestens ein Nitratsalz.

Nitratsalze weisen insbesondere eine relativ hohe Temperatur auf, ab der eine thermische Zersetzung eine Rolle spielt. So lassen sich Temperaturbereiche bis zu beispielsweise 650°C als erste Maximaltemperatur darstellen.

Bevorzugt umfasst das zweite Wärmemedium und/oder gegebenenfalls das dritte Wärmemedium ein Thermoöl.

Unter dem Begriff Thermoöl wird ein Öl verstanden, welches in den entsprechenden Temperaturbereichen eine genügend kleine Viskosität aufweist. Insbesondere können als Thermoöle Mineralöle, Silikonöle und/aromatische Kohlenwasserstoffe eingesetzt werden.

Thermoöle (z. B. Silikonöle wie das unter der Bezeichnung SYLTHERM 800 vertriebene Thermoöl) stellen insbesondere für die niedrigeren Temperaturbereiche eine kostengünstige Alternative zu entsprechenden zweiten/dritten Salzschmelzen dar, da diese Einsatzbereiche für bis zu 400°C aufweisen, nicht jedoch für Temperaturen bis 600°C und mehr geeignet sind.

Bevorzugt wird das erste Wärmemedium bei der ersten Maximaltemperatur in einem ersten ersten Speichervolumen und bei der ersten Minimaltemperatur in einem zweiten ersten Speichervolumen und/oder das zweite Wärmemedium bei der zweiten Maximaltemperatur in einem ersten zweiten Speichervolumen und bei der zweiten Minimaltemperatur in einem zweiten zweiten Speichervolumen gespeichert.

Bei dieser Ausführungsvariante wird jedes Wärmemedium bei seiner jeweiligen Maximaltemperatur, also beispielsweise der ersten Maximaltemperatur, in einem ersten Speichervolumen, also dem ersten ersten Speichervolumen für das erste Wärmemedium, und bei der jeweiligen Minimaltemperatur, also beispielsweis der ersten Minimaltemperatur, in einem zweiten Speichervolumen, also dem zweiten ersten Speichervolumen für das erste Wärmemedium, vorgehalten. Bei Speicherung von thermischer Energie wird entsprechend Wärmemedium aus dem zweiten Speichervolumen, also beispielsweise dem zweiten ersten Speichervolumen für das erste Wärmemedium, entnommen, bis zur jeweiligen Maximaltemperatur erwärmt und dann in das jeweilige erste Speichervolumen, also beispielsweise das erste erste Speichervolumen für das erste Wärmemedium, gefördert.

Die Ausbildung mit getrennten ersten und zweiten Speichervolumina lässt sich apparativ einfach umsetzen.

Gemäß einer vorteilhaften Ausgestaltung wird das erste Wärmemedium bei der ersten Maximaltemperatur und bei der ersten Minimaltemperatur in einem ersten Speichervolumen und/oder das zweite Wärmemedium bei der zweiten Maximaltemperatur und bei der zweiten Minimaltemperatur in einem zweiten Speichermedium gespeichert.

Gemäß dieser Ausführungsform wird also für das jeweilige Wärmemedium ein einziges Speichervolumen verwendet, um sowohl das jeweilige heiße und kalte Wärmemedium zu speichern. Hierbei liegt das jeweilige Wärmemedium (thermisch) geschichtet in dem Speichervolumen vor.

Es können sowohl getrennte Speichervolumina für ein oder mehrere Wärmemedien, das heißt ein erstes Speichervolumen für das entsprechende Wärmemedium bei der jeweiligen Maximaltemperatur und ein zweites Speichervolumen für das entsprechende Wärmemedium bei der jeweiligen Minimaltemperatur, als auch ein gemeinsames Speichervolumen für das entsprechende Wärmemedium bei der entsprechenden Maximaltemperatur und der entsprechenden Minimaltemperatur ausgebildet sein.

Vorteilhafter Weise wird bei der Abgabe von thermischer Energie ein Zielmedium durch thermischen Kontakt mit dem ersten Wärmemedium, dem zweiten Wärmemedium und gegebenenfalls dem dritten Wärmemedium erwärmt, wobei das Zielmedium zunächst in thermischem Kontakt mit dem Wärmemedium der niedrigsten Minimaltemperatur in thermischen Kontakt gebracht und dann sukzessive mit den Wärmemedien steigender Minimaltemperatur. So kann ein guter Wirkungsgrad und effizienter eine höhere Temperatur beim Aufheizen des Zielmediums, beispielsweise Wasserdampf zum Betrieb einer Turbine zur Stromerzeugung, erreicht werden. Unter dem Begriff thermischer Kontakt wird verstanden, dass ein Wärmeübergang zwischen den Medien möglich ist, beispielweise über einen Wärmetauscher oder ähnliches. Ein stofflicher Kontakt zwischen den Medien ist nicht notwendig.

Insbesondere ist es vorteilhaft, wenn die jeweiligen Minimaltemperaturen und Maximaltemperaturen einerseits an die jeweiligen Wärmemedien und andererseits an die gewünschte Aufheizung des Zielmediums angepasst werden, um einen hohen Wirkungsgrad und eine definierte Zieltemperatur des Zielmediums erreichen zu können.

Weiterhin wird ein Energiespeichersystem zur reversiblen Speicherung und Abgabe von thermischer Energie, umfassend einen ersten Speicherkreislauf umfassend mindestens ein erstes Speichervolumen zur Speicherung eines ersten Wärmemediums, welches eine erste Salzschmelze umfasst, und einen ersten Kreislauf zu einem ersten Eingangswärmetauscher zum Einbringen von thermischer Energie in das erste Wärmemedium und einen ersten Ausgangswärmetauscher zum Abgeben von thermischer Energie aus dem ersten Wärmemedium, welches sich dadurch auszeichnet, dass ein zweiter Speicherkreislauf, umfassend mindestens ein zweites Speichervolumen zur Speicherung eines zweiten Wärmemediums und einen zweiten Kreislauf zu einem zweiten Eingangswärmetauscher zum Einbringen von thermischer Energie in das zweite Wärmemedium und einen zweiten Ausgangswärmetauscher zum Abgeben von thermischer Energie aus dem zweiten Wärmemedium, wobei
- der erste Eingangswärmetauscher, der erste Ausgangswärmetauscher und das erste Wärmemedium so ausgewählt und ausgelegt werden, dass im Betrieb die Temperatur des ersten Wärmemediums zwischen einer ersten Minimaltemperatur und einer ersten Maximaltemperatur liegt, und
- der zweite Eingangswärmetauscher, der zweite Ausgangswärmetauscher und das zweite Wärmemedium so ausgewählt und ausgelegt werden, dass im Betrieb die Temperatur des zweiten Wärmemediums zwischen einer zweiten Minimaltemperatur und einer zweiten Maximaltemperatur liegt,
wobei die erste Maximaltemperatur größer ist als die zweite Maximaltemperatur und die erste Minimaltemperatur größer ist als die zweite Minimaltemperatur.

Die für das erfindungsgemäße Verfahren offenbarten Details und Vorteile lassen sich auf das erfindungsgemäße Energiespeichersystem übertragen und anwenden und umgekehrt.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen schematisch:
- Fig. 1: eine Ansicht eines ersten Beispiels eines Energiespeichersystems;
- Fig. 2: ein Beispiel eines Speichervolumens;
- Fig. 3: ein erstes Beispiel eines Temperaturverlaufes;
- Fig. 4: ein zweites Beispiel eines Temperaturverlaufs; und
- Fig. 5: eine Ansicht eines zweiten Beispiels eines Energiespeichersystems .

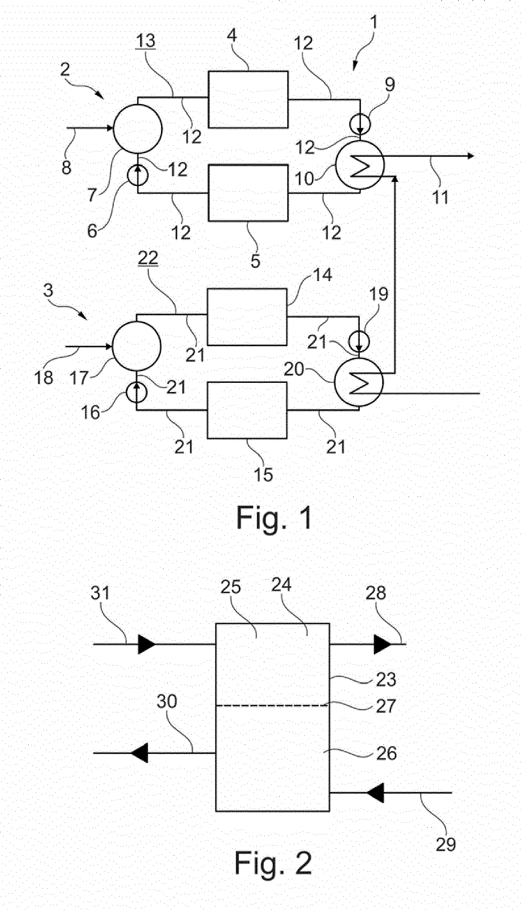

Fig. 1 zeigt schematisch eine Ansicht eines ersten Beispiels eines Energiespeichersystems 1 zur reversiblen Speicherung und Abgabe von thermischer Energie, in welchem das hier beschriebene Verfahren zum Einsatz kommt. Das Energiespeichersystem 1 umfasst einen ersten Speicherkreislauf 2 und einen zweiten Speicherkreislauf 3.

Der erste Speicherkreislauf 2 umfasst ein erstes erstes Speichervolumen 4 und ein zweites erstes Speichervolumen 5. Hierbei wird im ersten ersten Speichervolumen 4 ein erstes Wärmemedium bei einer ersten Maximaltemperatur vorgehalten, während im zweiten ersten Speichervolumen 5 das erste Wärmemedium bei einer ersten Minimaltemperatur vorgehalten wird. Im vorliegenden Beispiel liegt die erste Maximaltemperatur bei etwa 600 bis 650°C und die erste Minimaltemperatur bei etwa 500°C.

Bei der Speicherung von thermischer Energie im ersten Speicherkreislauf 2 wird dabei über eine erste Eingangspumpe 6 erstes Wärmemedium bei der ersten Minimaltemperatur aus dem zweiten ersten Speichervolumen 5 entnommen, in einem ersten Eingangswärmetauscher 7 geführt, in dem thermische Energie 8 eingebracht wird. Dadurch wird das erste Wärmemedium bis zur ersten Maximaltemperatur aufgeheizt und dann bei der ersten Maximaltemperatur dem ersten ersten Speichervolumen 4 zugeführt. Die thermische Energie 8 kann dabei solarthermisch erzeugte Wärme, elektrisch erzeugte Wärme, Wärme aus einer Wärmepumpe, fossil erzeugte Wärme und/oder Abwärme sein. Das erste Wärmemedium umfasst dabei eine Salzschmelze, insbesondere umfassend Natriumnitrat und Kaliumnitrat.

Bei der Abgabe von thermischer Energie im ersten Speicherkreislauf 2 wird über eine erste Ausgangspumpe 9 erstes Wärmemedium bei der ersten Maximaltemperatur aus dem ersten ersten Speichervolumen 4 entnommen und einem ersten Ausgangswärmetauscher 10 zugeführt, in dem es in thermischem Kontakt mit einem Zielmedium 11 gebracht wird, so dass sich die Temperatur des ersten Wärmemediums von der ersten Maximaltemperatur zur ersten Minimaltemperatur reduziert und sich die Temperatur des Zielmediums 11 entsprechend erhöht. Es wird also thermische Energie aus dem ersten Wärmemedium auf das Zielmedium 11 übertragen bzw. an dieses abgegeben. Beim Einströmen in den ersten Ausgangswärmetauscher 10 weist das Zielmedium bevorzugt eine Temperatur im Bereich von 400 bis 500°C auf. Danach wird das erste Wärmemedium bei der ersten Minimaltemperatur dem zweiten ersten Speichervolumen 5 zugeführt. Erstes erstes Speichervolumen 4, erste Ausgangspumpe 9, erster Ausgangswärmetauscher 10, zweites erstes Speichervolumen 5, erste Eingangspumpe 6, erster Eingangswärmetauscher 7 und erstes erstes Speichervolumen 4 sind dabei über Leitungen 12 miteinander verbunden, die einen ersten Kreislauf 13 bilden.

Der zweite Speicherkreislauf 3 umfasst ein erstes zweites Speichervolumen 14 und ein zweites zweites Speichervolumen 15. Hierbei wird im ersten zweiten Speichervolumen 14 ein zweites Wärmemedium bei einer zweiten Maximaltemperatur vorgehalten, während im zweiten zweiten Speichervolumen 15 das zweite Wärmemedium bei einer zweiten Minimaltemperatur vorgehalten wird. Im vorliegenden Beispiel liegt die zweite Maximaltemperatur bei etwa 500°C oder 550°C und die zweite Minimaltemperatur bei etwa 290°C.

Bei der Speicherung von thermischer Energie im zweiten Speicherkreislauf 2 wird dabei über eine zweite Eingangspumpe 16 zweites Wärmemedium bei der zweiten Minimaltemperatur aus dem zweiten zweiten Speichervolumen 15 entnommen, in einem zweiten Eingangswärmetauscher 17 geführt, in dem thermische Energie 18 eingebracht wird, dadurch bis zur zweiten Maximaltemperatur aufgeheizt und dann bei der zweiten Maximaltemperatur dem ersten zweiten Speichervolumen 14 zugeführt. Die thermische Energie 18 kann dabei solarthermisch erzeugte Wärme, elektrisch erzeugte Wärme, Wärme aus einer Wärmepumpe, fossil erzeugte Wärme und/oder Abwärme sein. Als zweites Wärmemedium wird bevorzugt eine Salzschmelze oder ein Thermoöl eingesetzt.

Bei der Abgabe von thermischer Energie im zweiten Speicherkreislauf 3 wird über eine zweite Ausgangspumpe 19 zweites Wärmemedium bei der zweiten Maximaltemperatur aus dem ersten zweiten Speichervolumen 14 entnommen und einem zweiten Ausgangswärmetauscher 20 zugeführt, in dem es in thermischem Kontakt mit einem Zielmedium 11 gebracht wird, so dass sich die Temperatur des zweiten Wärmemediums von der zweiten Maximaltemperatur zur zweiten Minimaltemperatur reduziert und sich die Temperatur des Zielmediums 11 entsprechend erhöht. Es wird also thermische Energie aus dem zweiten Wärmemedium auf das Zielmedium 11 übertragen bzw. an dieses abgegeben. Danach wird das zweite Wärmemedium bei der zweiten Minimaltemperatur dem zweiten zweiten Speichervolumen 15 zugeführt.

Erstes zweites Speichervolumen 14, zweite Ausgangspumpe 19, zweiter Ausgangswärmetauscher 20, zweites zweites Speichervolumen 15, zweite Eingangspumpe 16, zweiter Eingangswärmetauscher 17 und erstes zweites Speichervolumen 14 sind dabei über Leitungen 21 miteinander verbunden, die einen zweiten Kreislauf 22 bilden.

Das vorliegende Beispiel ist auf die Verstromung der thermischen Energie in einem nicht gezeigten Turbinensatz hin optimiert. Das erste Zielmedium 11 im vorliegenden Beispiel ist Wasserdampf. Bei der Abgabe von thermischer Energie aus dem ersten Speicherkreislauf 2 und dem zweiten Speicherkreislauf 3 wird das Zielmedium 11 zunächst mit einer Temperatur, die unterhalb der zweiten Minimaltemperatur liegt, durch den zweiten Ausgangswärmetauscher 20 geführt und erwärmt sich dabei auf eine Temperatur nahe der ersten Minimaltemperatur. Daran anschließend wird das Zielmedium 11 dem ersten Ausgangswärmetauscher 10 zugeführt, welchen es mit einer Temperatur nahe der ersten Maximaltemperatur verlässt. Das Zielmedium wird komprimiert über einen nicht gezeigten Turbinensatz geführt und kühlt sich dabei wieder ab.

Hierbei sind der erste Eingangswärmetauscher 7, der erste Ausgangswärmetauscher 10 und das erste Wärmemedium so ausgewählt und ausgelegt, dass im Betrieb die Temperatur des ersten Wärmemediums zwischen einer ersten Minimaltemperatur und einer ersten Maximaltemperatur liegt, und der zweite Eingangswärmetauscher 17, der zweite Ausgangswärmetauscher 20 und das zweite Wärmemedium sind so ausgewählt und ausgelegt, dass im Betrieb die Temperatur des zweiten Wärmemediums zwischen einer zweiten Minimaltemperatur und einer zweiten Maximaltemperatur liegt.

Fig. 2 zeigt schematisch ein Speichervolumen 23. Dieses ist geschichtet mit einem Wärmemedium 24 gefüllt. Hierbei weist das Speichervolumen 23 einen Bereich erster Temperatur 25 und einen Bereich zweiter Temperatur 26 auf, die durch eine Trennschicht 27 voneinander getrennt sind. Die Lage der Trennschicht 27 in vertikaler Richtung hängt von der thermischen Beladung ab, also von den Volumina des Bereichs erster Temperatur 25 und des Bereichs zweiter Temperatur 26. Die erste Temperatur ist größer als die zweite Temperatur.

Durch eine erste Entnahmeleitung 28 kann Wärmemedium 24 aus dem Bereich erster Temperatur 25 entnommen werden und nach Abgabe thermischer Energie bei der zweiten Temperatur über eine zweite Zuführleitung 29 wieder in den Bereich zweiter Temperatur 26 zugeführt werden. Die Speicherung von thermischer Energie erfolgt durch Entnahme von Wärmemedium bei der zweiten Temperatur aus dem Bereich zweiter Temperatur 26 über eine zweite Entnahmeleitung 30 entnommen werden, durch Einbringung von thermischer Energie auf die erste Temperatur erwärmt und dann über eine erste Zuführleitung 31 in den Bereich erster Temperatur 25 geführt werden. Je nach Befüllungsgrad ändert sich die Lage der Trennschicht 27.

Durch ein solches Speichervolumen 23 kann die Kombination aus erstem erstem Speichervolumen 4 und zweitem ersten Speichervolumen 5 und/oder die Kombination aus erstem zweitem Speichervolumen 14 und zweitem zweitem Speichervolumen 15 ersetzt werden. Hierbei agiert dann der Bereich erster Temepratur 24 als erstes erstes Speichervolumen 4 oder als erstes zweites Speichervolumen 14 und der Bereich zweiter Temperatur 26 als zweites erstes Speichervolumen 5 oder als zweites zweites Speichervolumen 15.

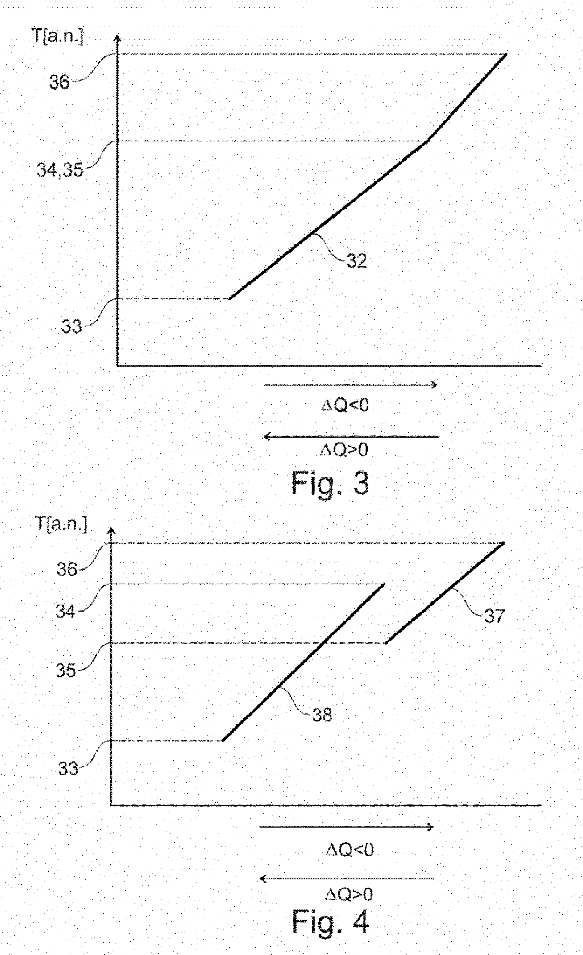

Fig. 3 zeigt einen Temperaturverlauf 32 der Wärmemedien für eine Verfahrensführung in einem Energiespeichersystem 1 nach Fig. 1. Der Temperaturverlauf 32 zeigt die zweite Minimaltemperatur 33, die zweite Maximaltemperatur 34, die erste Minimaltemperatur 35, die in diesem Beispiel der zweiten Maximaltemperatur 34 entspricht und die erste Maximaltemperatur 36. Dieser Temperaturverlauf entspricht dem Temperaturverlauf, den die Wärmemedien in den Ausgangswärmetauschern 10, 20 oder den Eingangswärmetauschern 7, 17 einem Wärmeaustausch zur Verfügung stellen. Bei Wärmeaufnahme (ΔQ<0) im Energiespeichersystem 1 wird dabei dem Temperaturverlauf 32 von links nach rechts gefolgt, bei Wärmeabgabe (ΔQ>0) von rechts nach links.

Fig. 4 zeigt einen ersten Temperaturverlauf 37 mit Temperaturen zwischen der ersten Minimaltemperatur 35 und der ersten Maximaltemperatur 36 für das erste Wärmemedium und einen zweiten Temperaturverlauf 38 mit Temperaturen zwischen der zweiten Minimaltemperatur 33 und der zweiten Maximaltemperatur 34. Hier liegt die zweite Maximaltemperatur 34 oberhalb der ersten Minimaltemperatur 35. Der erste Temperaturverlauf 37 liegt dabei wärmemediumseitig im ersten Speicherkreislauf 2 und der zweite Temperaturverlauf 38 wärmemediumseitig im zweiten Speicherkreislauf 3 an. Bei Wärmeaufnahme (ΔQ<0) im Energiespeichersystem 1 wird dabei den Temperaturverläufen 37, 38 von links nach rechts gefolgt, bei Wärmeabgabe (ΔQ>0) von rechts nach links.

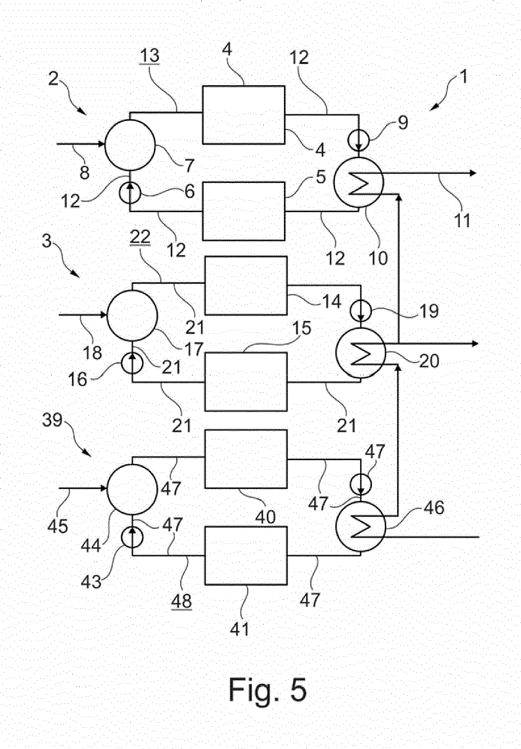

Fig. 5 zeigt ein zweites Beispiel eines Energiespeichersystems 1, welches im Vergleich zum ersten Beispiel aus Fig. 1 einen dritten Speicherkreislauf 39 aufweist. Im Folgenden sollen lediglich die Unterschiede zum ersten Beispiel erläutert werden, um Wiederholungen zu vermeiden wird auf die oben gemachten Ausführungen zum ersten Beispiel verwiesen, insbesondere im Hinblick auf den ersten Speicherkreislauf 2 und den zweiten Speicherkreislauf 3.

Der dritte Speicherkreislauf 39 ist für ein drittes Wärmemedium, umfassend eine Salzschmelze oder Thermoöl, ausgelegt und umfasst ein erstes drittes Speichervolumen 40 und ein zweites drittes Speichervolumen 41. Hierbei wird im ersten dritten Speichervolumen 40 ein drittes Wärmemedium bei einer dritten Maximaltemperatur vorgehalten, während im zweiten dritten Speichervolumen 41 das dritte Wärmemedium bei einer dritten Minimaltemperatur vorgehalten wird.

Im vorliegenden Beispiel liegt die erste Maximaltemperatur bei etwa 600 bis 650°C , die erste Minimaltemperatur bei etwa 500°C, die zweite Maximaltemperatur bei etwa 500°C oder 550°C, die zweite Minimaltemperatur bei etwa 290°C, die dritte Maximaltemperatur bei etwa 400°C und die dritte Minimaltemperatur bei etwa 150°C

Bei der Speicherung von thermischer Energie im dritten Speicherkreislauf 39 wird dabei über eine dritte Eingangspumpe 43 drittes Wärmemedium bei der dritten Minimaltemperatur aus dem zweiten dritten Speichervolumen 41 entnommen, in einem dritten Eingangswärmetauscher 44 geführt, in dem thermische Energie 45 eingebracht wird, dadurch bis zur dritten Maximaltemperatur aufgeheizt und dann bei der dritten Maximaltemperatur dem ersten dritten Speichervolumen 40 zugeführt. Die thermische Energie 45 kann dabei solarthermisch erzeugte Wärme, elektrisch erzeugte Wärme, Wärme aus einer Wärmepumpe, fossil erzeugte Wärme und/oder Abwärme sein. Als drittes Wärmemedium wird bevorzugt eine Salzschmelze oder ein Thermoöl eingesetzt.

Bei der Abgabe von thermischer Energie im dritten Speicherkreislauf 39 wird über eine dritte Ausgangspumpe 42 drittes Wärmemedium bei der dritten Maximaltemperatur aus dem ersten dritten Speichervolumen 40 entnommen und einem dritten Ausgangswärmetauscher 46 zugeführt, in dem es in thermischem Kontakt mit einem Zielmedium 11 gebracht wird, so dass sich die Temperatur des dritten Wärmemediums von der dritten Maximaltemperatur zur dritten Minimaltemperatur reduziert und sich die Temperatur des Zielmediums 11 entsprechend erhöht. Es wird also thermische Energie aus dem dritten Wärmemedium auf das Zielmedium 11 übertragen bzw. an dieses abgegeben. Danach wird das dritte Wärmemedium bei der dritten Minimaltemperatur dem zweiten dritten Speichervolumen 41 zugeführt.

Bei der Abgabe von Energie strömt also das Zielmedium 11 in diesem zweiten Beispiel zunächst durch den dritten Ausgangswärmetauscher 46, dann den zweiten Ausgangswärmetauscher 20 und dann durch den ersten Ausgangswärmetauscher 10. Durch die entsprechende Anpassung der ersten, zweiten und dritten Wärmemedien im Hinblick auf die erste, zweite und dritte Minimaltemperatur und Maximaltemperatur kann so eine effiziente Aufheizung des Zielmediums 11 auf eine Temperatur nahe der ersten Maximaltemperatur erreicht werden.

Erstes drittes Speichervolumen 40, dritte Ausgangspumpe 42, dritter Ausgangswärmetauscher 46, zweites drittes Speichervolumen 41, dritte Eingangspumpe 43, dritter Eingangswärmetauscher 44 und erstes drittes Speichervolumen 40 sind dabei über Leitungen 47 miteinander verbunden, die einen dritten Kreislauf 48 bilden.

Die Erfindung bezieht sich auf die reversible Speicherung thermischer Energie in mindestens zwei Speicherkreisläufen 2, 3 unterschiedlicher, aufeinander abgestimmter, Temperaturen, von denen zumindest der erste Speicherkreislauf 2 bei hoher Temperatur eine Salzschmelze als Energiespeicher aufweist, in die und aus der Energie sensibel, das heißt ohne Phasenübergang, entnommen wird, ist einfach aufzubauen und zu betreiben. Insbesondere lassen sich effizienter hohe Temperaturen realisieren und der Aufwand für das Austauschen thermisch geschädigter Salzschmelze ist im Vergleich zu bekannten Ansätzen reduziert. Die Temperaturführung ist flexibler möglich. Die weiteren Speicherkreisläufe 3 werden mit Salzschmelze und/oder Thermoöl betrieben.

### Bezugszeichenliste

- 1: Energiespeichersystem
- 2: Erster Speicherkreislauf
- 3: Zweiter Speicherkreislauf
- 4: Erstes erstes Speichervolumen
- 5: Zweites erstes Speichervolumen
- 6: Erste Eingangspumpe
- 7: Erster Eingangswärmetauscher
- 8: Thermische Energie
- 9: Erste Ausgangspumpe
- 10: Erster Ausgangswärmetauscher
- 11: Zielmedium
- 12: Leitung
- 13: Erster Kreislauf
- 14: Erstes zweites Speichervolumen
- 15: Zweites zweites Speichervolumen
- 16: Zweite Eingangspumpe
- 17: Zweiter Eingangswärmetauscher
- 18: Thermische Energie
- 19: Zweite Ausgangspumpe
- 20: Zweiter Ausgangswärmetauscher
- 21: Leitung
- 22: Zweiter Kreislauf
- 23: Speichervolumen
- 24: Wärmemedium
- 25: Bereich erster Temperatur
- 26: Bereich zweiter Temperatur
- 27: Trennschicht
- 28: Erste Entnahmeleitung
- 29: Zweite Zuführleitung
- 30: Zweite Entnahmeleitung
- 31: Erste Zuführleitung
- 32: Temperaturverlauf
- 33: zweite Minimaltemperatur
- 34: zweite Maximaltemperatur
- 35: erste Minimaltemperatur
- 36: erste Maximaltemperatur
- 37: erster Temperaturverlauf
- 38: zweiter Temperaturverlauf
- 39: dritter Speicherkreislauf
- 40: erstes drittes Speichervolumen
- 41: zweites drittes Speichervolumen
- 42: dritte Ausgangspumpe
- 43: dritte Eingangspumpe
- 44: dritter Eingangswärmetauscher
- 45: thermische Energie
- 46: dritte Ausgangswärmetauscher
- 47: Leitung
- 48: dritter Kreislauf

## Patentansprüche

1. Verfahren zur reversiblen Speicherung und Abgabe von thermischer Energie, bei dem
bei der Speicherung thermische Energie so in ein erstes Wärmemedium umfassend eine erste Salzschmelze eingebracht wird, dass das erste Wärmemedium von einer ersten Minimaltemperatur (35) auf eine erste Maximaltemperatur (36) erhitzt wird und thermische Energie so in ein zweites Wärmemedium eingebracht wird, dass das zweite Wärmemedium von einer zweiten Minimaltemperatur (33) auf eine zweite Maximaltemperatur (34) erhitzt wird und
bei der Abgabe dem ersten Wärmemedium thermische Energie entnommen wird, bis es die erste Minimaltemperatur (35) erreicht hat und dem zweiten Wärmemedium thermische Energie entnommen wird, bis es die zweite Minimaltemperatur (33) erreicht hat,
wobei die erste Maximaltemperatur (36) größer als die zweite Maximaltemperatur (34) und die erste Minimaltemperatur (35) größer ist als die zweite Minimaltemperatur (33),
wobei das erste Wärmemedium in mindestens einem ersten Speichervolumen (4, 5) bei mindestens einer der folgenden Temperaturen: der ersten Minimaltemperatur (35) und der ersten Maximaltemperatur (36) und das zweite Wärmemedium in mindestens einem zweiten Speichervolumen (14, 15) bei mindestens einer der folgenden Temperaturen: der zweiten Minimaltemperatur (33) und der zweiten Maximaltemperatur (34) gespeichert wird.

2. Verfahren nach Anspruch 1, bei dem mindestens ein drittes Wärmemedium ausgebildet ist,
wobei bei der Speicherung thermische Energie so in das dritte Wärmemedium eingebracht wird, dass das dritte Wärmemedium von einer dritten Minimaltemperatur auf eine dritte Maximaltemperatur erhitzt wird,
bei der Abgabe dem dritten Wärmemedium thermische Energie entnommen wird, bis es die dritte Minimaltemperatur erreicht hat,
wobei das dritte Wärmemedium in mindestens einem dritten Speichervolumen (40, 41) bei mindestens einer der folgenden Temperaturen: der dritten Minimaltemperatur und der dritten Maximaltemperatur gespeichert wird,
wobei die dritte Minimaltemperatur kleiner gleich der zweiten Minimaltemperatur ist.

3. Verfahren nach Anspruch 2, bei dem das dritte Wärmemedium eine dritte Salzschmelze umfasst.

4. Verfahren nach einem der vorhergehenden Ansprüche, bei dem das zweite Wärmemedium eine zweite Salzschmelze umfasst.

5. Verfahren nach einem der Ansprüche 2 bis 4, bei dem die erste Salzschmelze und die zweite Salzschmelze und gegebenenfalls die dritte Salzschmelze identische Salze umfassen.

6. Verfahren nach einem der vorhergehenden Ansprüche, bei dem mindestens eines aus dem ersten Wärmemedium und dem zweiten Wärmemedium und gegebenenfalls dem dritten Wärmemedium mindestens ein Nitratsalz umfasst.

7. Verfahren nach einem der vorhergehenden Ansprüche, bei dem das zweite Wärmemedium und/oder gegebenenfalls das dritte Wärmemedium ein Thermoöl umfasst.

8. Verfahren nach einem der vorhergehenden Ansprüche, bei dem
das erste Wärmemedium bei der ersten Maximaltemperatur (36) in einem ersten ersten Speichervolumen (4) und bei der ersten Minimaltemperatur (35) in einem zweiten ersten Speichervolumen (5)
und/oder
das zweite Wärmemedium bei der zweiten Maximaltemperatur (34) in einem ersten zweiten Speichervolumen (14) und bei der zweiten Minimaltemperatur (33) in einem zweiten zweiten Speichervolumen (15) gespeichert wird.

9. Verfahren nach einem der vorhergehenden Ansprüche, bei dem
das erste Wärmemedium bei der ersten Maximaltemperatur (36) und bei der ersten Minimaltemperatur (35) in einem ersten Speichervolumen
und/oder
das zweite Wärmemedium bei der zweiten Maximaltemperatur (34) und bei der zweiten Minimaltemperatur (33) in einem zweiten Speichermedium gespeichert wird.

10. Verfahren nach einem der vorhergehenden Ansprüche, bei dem bei der Abgabe von thermischer Energie ein Zielmedium (11) durch thermischen Kontakt mit dem ersten Wärmemedium, dem zweiten Wärmemedium und gegebenenfalls dem dritten Wärmemedium erwärmt wird, wobei das Zielmedium (11) zunächst in thermischem Kontakt mit dem Wärmemedium der niedrigsten Minimaltemperatur in thermischen Kontakt gebracht wird und dann sukzessive mit den Wärmemedien steigender Minimaltemperatur.

11. Energiespeichersystem (1) zur reversiblen Speicherung und Abgabe von thermischer Energie, umfassend einen ersten Speicherkreislauf (2) umfassend mindestens ein erstes Speichervolumen (4, 5) zur Speicherung eines ersten Wärmemediums, welches eine erste Salzschmelze umfasst, und einen ersten Kreislauf (13) zu einem ersten Eingangswärmetauscher (7) zum Einbringen von thermischer Energie in das erste Wärmemedium und einen ersten Ausgangswärmetauscher (10) zum Abgeben von thermischer Energie aus dem ersten Wärmemedium,
**dadurch gekennzeichnet, dass**
ein zweiter Speicherkreislauf (3), umfassend mindestens ein zweites Speichervolumen (14, 15) zur Speicherung eines zweiten Wärmemediums und einen zweiten Kreislauf (22) zu einem zweiten Eingangswärmetauscher (17) zum Einbringen von thermischer Energie in das zweite Wärmemedium und einen zweiten Ausgangswärmetauscher (46) zum Abgeben von thermischer Energie aus dem zweiten Wärmemedium,
wobei
- der erste Eingangswärmetauscher (7), der erste Ausgangswärmetauscher (10) und das erste Wärmemedium so ausgewählt und ausgelegt werden, dass im Betrieb die Temperatur des ersten Wärmemediums zwischen einer ersten Minimaltemperatur (35) und einer ersten Maximaltemperatur (36) liegt, und
- der zweite Eingangswärmetauscher (17), der zweite Ausgangswärmetauscher (20) und das zweite Wärmemedium so ausgewählt und ausgelegt werden, dass im Betrieb die Temperatur des zweiten Wärmemediums zwischen einer zweiten Minimaltemperatur (33) und einer zweiten Maximaltemperatur (34) liegt,
wobei die erste Maximaltemperatur (36) größer ist als die zweite Maximaltemperatur (34) und die erste Minimaltemperatur (35) größer ist als die zweite Minimaltemperatur (33).
